# EUROPÄISCHE PATENTSCHRIFT

(11) **EP 2 176 532 B1**
(45) Veröffentlichungstag und Bekanntmachung des Hinweises auf die Patenterteilung: **20.04.2016**
(21) Anmeldenummer: 08761278.4
(22) Anmeldetag: 20.06.2008
(51) Int. Cl.: F02D 11/10, F02D 9/10, F16K 31/04, H02K 5/00

(54) **ELEKTRISCHE VERBRENNUNGSKRAFTMASCHINEN-STELLANORDNUNG**
ELECTRICAL INTERNAL COMBUSTION ENGINE ACTUATING ARRANGEMENT
ENSEMBLE ÉLECTRIQUE DE RÉGLAGE D'UN MOTEUR À COMBUSTION INTERNE

(30) Priorität: 16.08.2007 DE 102007038746
(43) Veröffentlichungstag der Anmeldung: 21.04.2010
(73) Patentinhaber: Pierburg GmbH, 41460 Neuss (DE)
(72) Erfinder: NEISE, Ralf, 13086 Berlin (DE); SCHROEDER, Thomas, 12589 Berlin (DE)
(74) Vertreter: Patentanwälte ter Smitten Eberlein Rütten Partnerschaftsgesellschaft
(86) Internationale Anmeldenummer: PCT/EP2008/057881
(87) Internationale Veröffentlichungsnummer: WO 2009/021767

(56) Entgegenhaltungen:
- EP-A- 1 321 648
- EP-A- 1 655 579
- EP-A- 1 669 573
- US-A1- 2004 129 252
- US-A1- 2006 266 329
- US-A1- 2007 113 824

## Beschreibung

Die Erfindung bezieht sich auf eine elektrische Verbrennungskraftmaschinen-Stellanordnung mit einem Gehäusekörper, der einen elektrischen Antriebsmotor und eine Abtriebswelle mit einem Positionsgeber hält, und einem Gehäusedeckel mit einem Positionsaufnehmer.

Die gattungsgemäße Stellanordnung weist mindestens eine elektrische Steckschluss-Anordnung auf, durch die der Gehäusedeckel einerseits und der Antriebsmotor andererseits elektrisch miteinander verbunden sind. Die Steckschluss-Anordnung wird durch eine Steckerzunge einerseits und eine gegenüberliegende und einen Einsteckschlitz aufweisende Steckerklammer andererseits gebildet.

Die Stellanordnung wird in Kraftfahrzeugen, die durch Verbrennungskraftmaschinen angetrieben werden, zur Verstellung von Stellorganen, wie beispielsweise von Drosselklappen, Tumble-, Drall- oder Schaltklappen, verwendet, wobei die Stellorgane entweder direkt auf der Antriebswelle des Antriebsmotors angeordnet oder indirekt über ein Getriebe, über Hebel oder Gestänge, mit der Antriebsmotor-Abtriebswelle verbunden sind.

Eine derartige Stellanordnung ist aus US 2004/0129252 oder DE 10 2004 053 703 A1 bekannt. Hierbei handelt es sich um eine Stellanordnung mit einer berührungslosen Winkelsensorik, die von als Positionsgeber ausgebildeten Permanentmagneten an der Stellanordnungs-Abtriebswelle einerseits und einem als Positionsaufnehmer ausgebildeten Hallsensor an dem Gehäusedeckel andererseits gebildet wird. Die Stellanordnungs-Abtriebswelle ist an dem Gehäusedeckel gelagert.

Eine derartige berührungslose Winkelsensorik ist in Bezug auf die exakte Positionierung des Positonsgebers zu dem Positionsaufnehmer sehr empfindlich. Die Ausrichtung des Gehäusedeckels mit dem Gehäusekörper bei der Montage erfolgt über Befestigungselemente zur Befestigung des Gehäusedeckels an dem Gehäusekörper, also über Schrauben in Bohrungen, und/oder über die Abtriebswelle bzw. ggf. weitere Wellen des Getriebes, die in entsprechende Positionierbohrungen in dem Gehäusedeckel eingreifen. Allerdings sind diese Positionierelemente relativ weit entfernt von dem Positionsaufnehmer, so dass eine exakte wiederholbare Positionsaufnehmer-Positionierung nicht gewährleistet ist. Die Befestigungselemente sind zur Positionierung ohnehin nur bedingt geeignet, da sie naturgemäß ungenau sind. Schon Abweichungen des Positionsaufnehmers von seiner Sollposition von wenigen Zehntel Millimetern können zu nicht kompensierbaren Abweichungen der Aufnehmersignale führen. Die Nutzung der Wellen zur genauen Positionierung des Gehäusedeckels erhöht die Wellenreibung und die Gefahr, eine Welle bei der Montage zu verbiegen.

Beim Zusammenführen des Gehäusedeckels und des Gehäusekörpers ist ferner die Steckeranordnung bzw. sind die Steckeranordnungen, die den Antriebsmotor mit dem Gehäusedeckel elektrisch verbindet bzw. verbinden, zusammen zu führen und zu kontaktieren. Aufgrund der auftretenden Toleranz-Abweichungen fluchtet die Steckerzunge häufig nicht genau mit dem Einsteckschlitz der Steckerklammer. Beim Einstecken der Steckerzunge in den Einsteckschlitz kann die Steckerzunge und/oder die den Einsteckschlitz aufweisende Steckerklammer verbiegen. Dies kann soweit führen, dass ein Einklemmen der Steckerzunge in den Einsteckschlitz nicht mehr gewährleistet ist bzw. die Kontaktierung nur einseitig erfolgt und dadurch insbesondere für Vibrationen anfällig wird.

Aufgabe der Erfindung ist es demgegenüber, eine Stellanordnung zu schaffen, deren Positionsaufnehmer bei der Montage genau positioniert wird und die eine gute Kontaktierung des Antriebsmotors mit dem Gehäusedeckel gewährleistet.

Diese Aufgabe wird erfindungsgemäß gelöst mit den Merkmalen des Patentanspruches 1.

Bei der erfindungsgemäßen Stellanordnung ist eine separate Positionieranordnung vorgesehen, die keine Sekundärfunktion hat und die in möglichst großer Nähe zu dem Positionsaufnehmer des Gehäusedeckels angeordnet ist. Durch den Verzicht auf eine Sekundärfunktion kann die Positionieranordnung ausschließlich im Hinblick auf ihre wesentlichen Aufgaben gestaltet werden, nämlich eine hohe Positioniergenauigkeit und eine hohe Montagesicherheit. Die Positionieranordnung besteht aus einem Positionierstift einerseits, z.B. deckelseitig, und einer Positionierbohrung andererseits, z.B. gehäusekörperseitig. Die Steckachse der Positionieranordnung ist parallel zu der Steckachse der Steckanschluss-Anordnung. Weder die Befestigungselemente, noch die Abtriebswelle, noch andere Wellen des Getriebes haben eine Positionieraufgabe, so dass diese Bauteile ausschließlich im Hinblick auf ihre jeweilige Primäraufgabe ausgelegt werden können.

Die Positionieranordnung kann, da sie keine Sekundäraufgaben hat, in größtmöglicher Nähe zu dem Positionsaufnehmer angeordnet werden, so dass auch hierdurch eine hohe Positioniergenauigkeit und -reproduzierbarkeit sichergestellt werden kann. Dies ist gerade bei berührungslosen Positionsaufnehmern, die in aller Regel sehr positionsempfindlich sind, von hoher Wichtigkeit.

Die Fixierung des Gehäusedeckels an dem Gehäuse in der Öffnungsebene ist statisch mehrfach überbestimmt, nämlich durch die Befestigungselemente, die Positionieranordnung und eine oder zwei Steckanschluss-Anordnungen. Hierdurch besteht die Gefahr, dass die Steckanschluss-Anordnung wegen ihrer mechanischen Nachgiebigkeit bei der Montage verbogen bzw. beschädigt wird.

Die Steckeranordnung weist steckerklammerseitig eine separate Steckerzungen-Führung mit einem Führungsschlitz auf, der parallel zu dem Einsteckschlitz der Steckerklammer angeordnet ist. Die Führung und die Positionierung der Steckerzunge muss nicht mehr von der Steckerklammer geleistet werden, sondern wird durch die separate Steckerzungen-Führung geleistet, die der Steckerklammer fest zugeordnet ist. Auf diese Weise werden Führungs- und Haltekräfte weitgehend ferngehalten von der Steckerklammer, so dass auch entsprechende Deformationen der Steckerklammer und der Steckerzunge dauerhaft ausgeschlossen sind.

Die Führungsfunktion und die Kontaktfunktion der Steckanschluss-Anordnung sind nicht mehr in einem Bauteil vereinigt, sondern werden von getrennten Bauteilen übernommen. Auf diese Weise können sowohl die Führungsfunktion als auch die Kontaktfunktion optimiert werden, ohne die jeweils andere Funktion dabei unmittelbar zu beeinflussen bzw. zu verschlechtern.

Durch den Führungsschlitz der Steckerzungen-Führung wird eine definierte Zwangsausrichtung der Steckerzunge realisiert. Die Zwangsausrichtung der Steckerzunge erfolgt bereits vor der Kontaktierung der Steckerklammer durch die separate Steckerzungen-Führung. Durch die separate Steckerzungen-Führung wird sowohl die Montage erleichtert, die Fehlerträchtigkeit der Montage verringert als auch die Beständigkeit und die Qualität der elektrischen Verbindung zwischen der Steckerzunge und der Steckerklammer verbessert.

Vorzugsweise ist die Positionieranordnung näher an dem Positionsaufnehmer als an der Steckanschluss-Anordnung angeordnet. Da auch die Steckanschluss-Anordnung die Position des Gehäusedeckels mitbestimmt, jedoch eine lange Toleranzkette aufweist, sollte die Positionieranordnung möglichst weit entfernt von der Steckanschluss-Anordnung und möglichst nah an dem Positionsaufnehmer angeordnet sein, besonders bevorzugt mindestens zweimal näher an dem Positionsaufnehmer.

Gemäß einer bevorzugten Ausführung sitzt der Positionierstift mit Klemmsitz in der Positionierbohrung. Hierdurch wird ein definierter Sitz des Positionierstiftes in der Positionierbohrung sichergestellt.

Vorzugsweise ist der Positionierstift im Querschnitt mindestens dreikantig und ist die Positionierbohrung im Querschnitt kreisrund ausgebildet. Hierdurch wird beim Einstecken mit Klemmsitz Material des Positionierstiftes und/oder in der Positionierbohrung im Bereich der Kanten verdrängt und ein definierter und fester Sitz des Positionierstiftes in der Positionierbohrung sichergestellt.

Vorzugsweise ist jeweils eine Führung zu beiden Längsseiten der Steckerklammer vorgesehen, d. h., der Einsteckschlitz ist zwischen zwei parallelen Führungsschlitzen angeordnet. Der Einsteckschlitz und die beiden Führungsschlitze liegen in einer Ebene, die senkrecht zur Öffnungsebene steht. Auf diese Weise wird die Steckerzunge beim Einstecken in den Einsteckschlitz der Steckerklammer auch bezüglich ihrer Rotation um die Längsachse, d. h. um die Steckachse, durch die beiden Führungsschlitze der beiden Steckerzungenführungen geführt. Bei einer Führung der Steckerzunge durch zwei Steckerzungen-Führungen wird die Steckerzunge eindeutig so geführt, dass sie exakt in den Einsteckschlitz der Steckerklammer eingeführt bzw. eingesteckt wird.

Gemäß einer bevorzugten Ausgestaltung wird der Führungsschlitz von einem Führungskörper gebildet, der einstückig mit dem Gehäusedeckel bzw. dem Gehäusekörper ausgebildet ist. Der Gehäusedeckel und der Gehäusekörper sind vorzugsweise aus Kunststoff gefertigt, so dass der Führungskörper ohne nennenswerten Mehraufwand einstückig an den Gehäusedeckel bzw. den Gehäusekörper angeformt ist.

Gemäß einer bevorzugten Ausgestaltung weist der Führungskörper an seinem distalen Führungsschlitz-Ende einen Einfädelungstrichter auf. Der Einfädelungstrichter kann beispielsweise in Form von Einführschrägen an dem distalen Einführungsende des Führungsschlitzes ausgebildet sein. Hierdurch wird das Einfädeln der Steckerzunge in den Führungsschlitz bzw. in die Führungsschlitze vereinfacht. Auf diese Weise wird eine Blindmontage erheblich vereinfacht, d. h. eine Montage, bei der eine Sicht des Monteurs bzw. der betreffenden Maschine auf die Steckeranordnung während des Fügens nicht möglich ist.

Vorzugsweise ragt der Führungsschlitz distal über den Einsteckschlitz hinaus. Die Steckerzunge wird also stets zunächst in den Führungsschlitz eingeführt, und erst anschließend in den Einsteckschlitz eingeführt. Hierdurch wird sichergestellt, dass die zwangsgeführte Ausrichtung der Steckerzunge erfolgt, bevor die Steckerzunge den Einsteckschlitz erreicht und die elektrische Kontaktierung erfolgt.

Gemäß einer bevorzugten Ausgestaltung ist die Zungenbreite größer als der Abstand der beiden äußeren Schlitze zueinander. Die Zungenbreite ist also mindestens so groß, wie der äußere Abstand des Führungsschlitzes zu dem Einsteckschlitz, wenn eine einzige Steckerzungen-Führung vorgesehen ist, oder wie der äußere Abstand der beiden Führungsschlitze zueinander, wenn zwei Steckerzungen-Führungen vorgesehen sind. Hierdurch wird sichergestellt, dass die Steckerzunge sowohl durch den Führungsschlitz bzw. die Führungsschlitze geführt als auch in den Einsteckschlitz der Steckerklammer eingesteckt wird. Je größer die Zungenbreite in Bezug auf den Schlitzabstand ist, desto sicherer ist die Einführung auch bei seitlichem Versatz der Steckerzunge.

Vorzugsweise ist die Führungsschlitz-Weite größer als das 0,85fache der Steckerzungen-Stärke, besonders bevorzugt größer als das 1,0fache. Je nach Anforderungsprofil kann die Weite des Führungsschlitzes bzw. der Führungsschlitze in der Steckerzungen-Führung kleiner als das 1,0fache der Steckerzungen-Stärke sein. In diesem Fall wird die Steckerzunge in den Führungsschlitz bzw. in die Führungsschlitze eingeklemmt. Zwar wird hierdurch die Steckerzunge durch verbesserten Kraftschluss besser fixiert und ist die elektrische Verbindung unempfindlicher gegenüber Schwingungen während des Betriebes, jedoch wird hierdurch gleichzeitig die Montage, insbesondere das Einführen der Steckerzunge in die Führungsschlitze und den Einsteckschlitz, erschwert.

Besonders bevorzugt ist daher eine Führungsschlitzweite von mehr als dem 1,0fachen der Steckerzungen-Stärke, wobei eine Führungsschlitzweite von weniger als dem 1,3fachen der Steckerzungen-Stärke anzustreben ist. In diesem Bereich wird ein minimales Spiel der Steckerzunge in dem Führungsschlitz bzw. in den Führungsschlitzen in Kauf genommen. Das Einstecken in die Führungsschlitze ist jedoch klemmungsfrei und daher insgesamt reibungsarm.

Grundsätzlich ist in Kraftfahrzeugen die Möglichkeit gegeben, einen elektrischen Antriebsmotor einerseits an Masse zu legen und mit einem einzigen weiteren elektrischen Anschluss zu betreiben. Der elektrische Antriebsmotor kann innerhalb eines gas- und flüssigkeitsdichten Gehäuses untergebracht sein, das vollständig aus Kunststoff besteht. Vorzugsweise sind nicht nur für diesen Fall zwei Steckeranordnungen zur elektrischen Verbindung des Antriebsmotors vorgesehen.

Gemäß einer bevorzugten Ausgestaltung ist die Steckerklammer bzw. sind die Steckerklammern gehäusedeckelseitig und ist die Steckerzunge bzw. sind die Steckerzungen antriebsmotorseitig vorgesehen.

Im folgenden wird unter Bezugnahme auf die Zeichnungen ein Ausführungsbeispiel der Erfindung näher erläutert.

Es zeigen:
- Figur 1: einen Längsschnitt durch eine komplette elektrische Verbrennungskraftmaschinen-Stellanordnung,
- Figur 2: einen Gehäusedeckel und einen elektrischen Antriebsmotor der Stellanordnung der Figur 1,
- Figur 3: eine Draufsicht auf die Innenseite des Gehäusedeckels der Figur 3,
- Figur 4: eine vergrößerte seitliche Ansicht der beiden Steckanschluss-Anordnungen in dem Gehäusedeckel der Figur 3,
- Figur 5: eine Schnittdarstellung der Stellanordnung mit der Positionieranordnung, dem Positionsgeber und dem Positionsaufnehmer, und
- Figur 6: eine perspektivische Ansicht der an eine Stellorgananordnung montierten deckellosen Stellanordnung

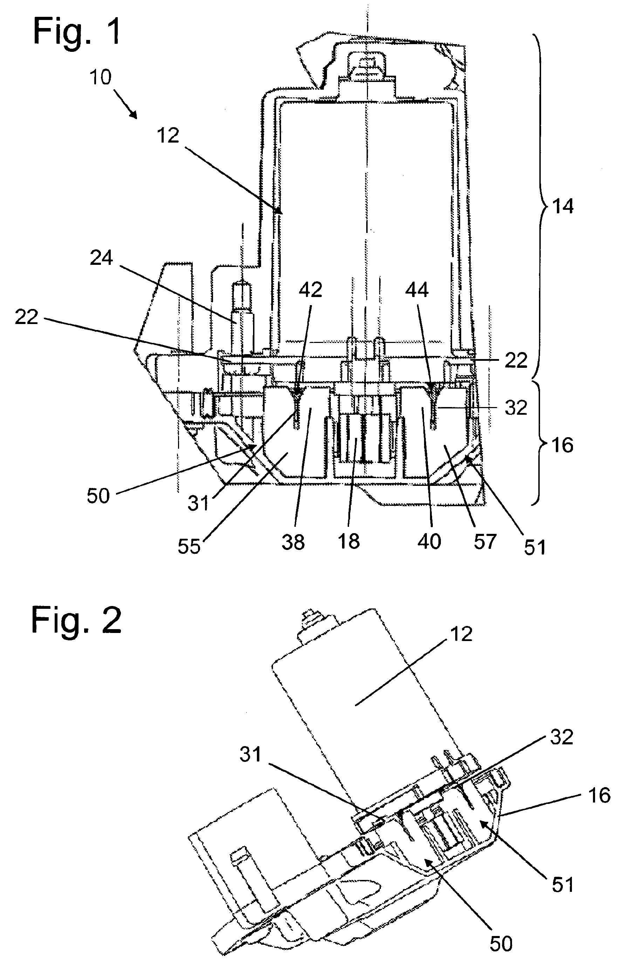

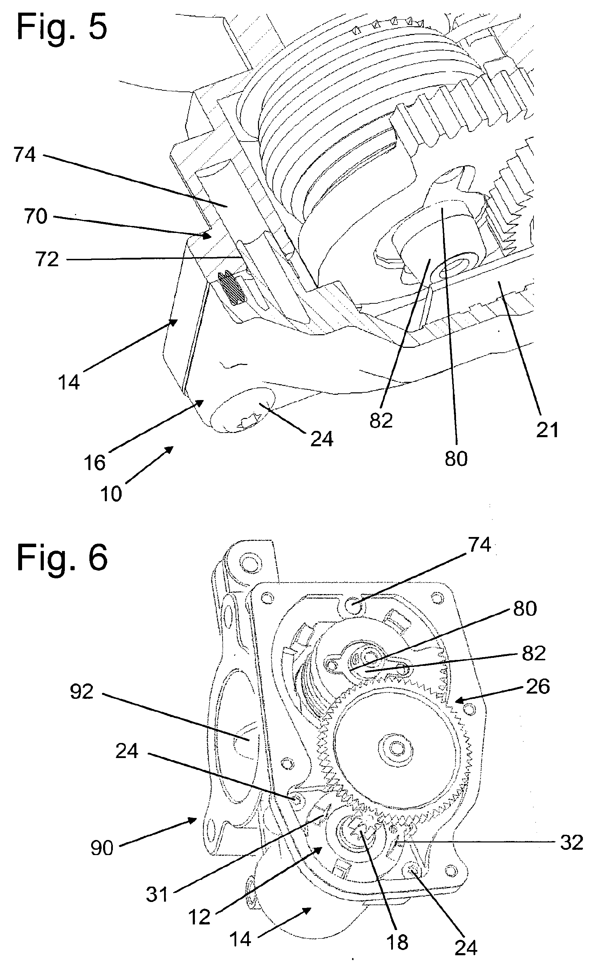

In der Figur 1 ist eine komplette elektrische Stellanordnung 10 für Verbrennungskraftmaschinen im Längsschnitt dargestellt. Die Stellanordnung 10 dient beispielsweise der Verstellung von Stellorganen einer Verbrennungskraftmaschine, beispielsweise zum Verstellen von Drosselklappen, Tumble-, Drall- oder Schaltklappen. In der Figur 6 ist eine Stellorgan-Anordnung 90 mit einer Drosselklappe als Stellorgan 92 dargestellt. Das Stellorgan 92 kann direkt auf der Abtriebswelle des Elektromotors 12 angeordnet sein, kann jedoch auch, wie vorliegend, indirekt über ein Getriebe 26, das eine Abtriebswelle 80 aufweist, angetrieben werden.

Die Stellanordnung 10 weist ein gas- und flüssigkeitsdichtes Gehäuse auf, das von einem komplexen Aluminium- Gehäusekörper 14 und einem die Öffnungsseite des Gehäusekörpers 14 verschließenden Kunststoff- Gehäusedeckel 16 gebildet wird. In dem Gehäusekörper 14 sitzt der elektrische Antriebsmotor 12 mit einem Abtriebsritzel 18. Das Abtriebsritzel 18 treibt über das gehäusekörperseitige Getriebe 26 die gehäusekörperseitige Abtriebswelle 80 an, die an ihrem freien Ende einen als dauermagnetischen Ringkörper ausgebildeten Positionsgeber 82 aufweist.

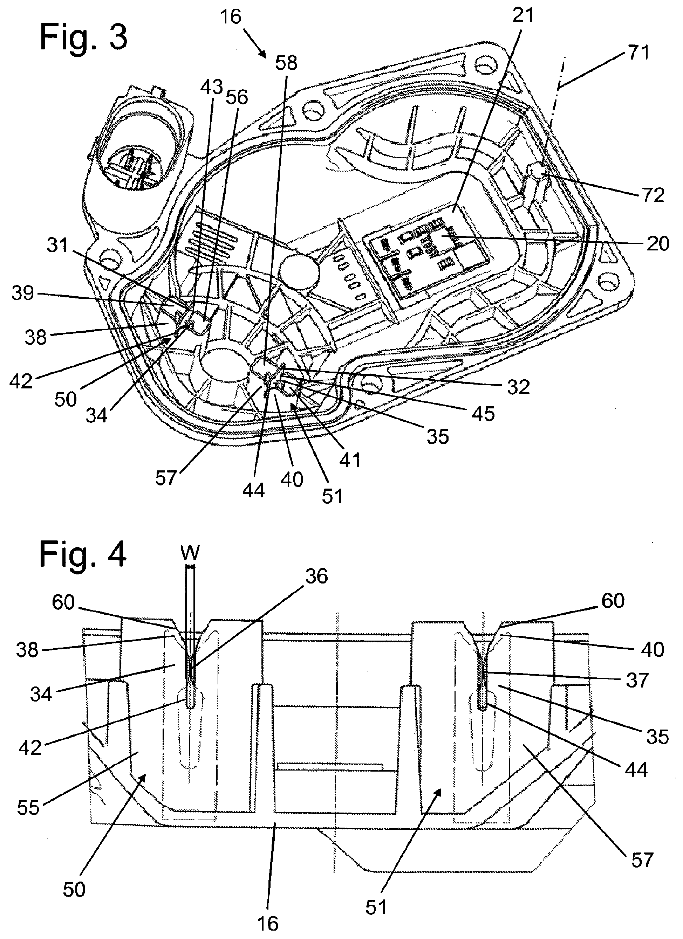

Auf der Innenseite des Gehäusedeckels 16 ist als Positionsaufnehmer 20 ein Hall-Sensor auf einer Leiterplatte 21 angeordnet, wie in Figur 3 dargestellt. Die Leiterplatte ist auf der Innenseite des Gehäusedeckels 16 angeordnet. Der Positionsaufnehmer 20 ermittelt die rotatorische Position der Stellanordnungs-Abtriebswelle 80 durch Auswertung des von dem magnetischen Positionsgeber 82 generierten Magnetfeldes.

Der Antriebsmotor 12 weist einen Flansch 22 mit zwei Befestigungsbohrungen auf, durch die Befestigungsschrauben 24 zur Befestigung des Antriebsmotors 12 an bzw. in dem Gehäusekörper 14 eingeschraubt sind. Nach der Montage des Antriebsmotors 12 und der Vormontage des Getriebes 26 in dem Gehäusekörper 14 sowie der Montage der Leiterplatte 21 mit dem Positionsaufnehmer 20 in dem Gehäusedeckel 16 wird die Öffnung des Gehäusekörpers 14 mit dem Gehäusedeckel 16 verschlossen.

Der Gehäusekörper 14 und der Gehäusedeckel 16 weisen eine Positionieranordnung 70 auf, die von einem deckelseitigen sechskantigen Positionierstift 72 und einer gehäusekörperseitigen zylindrischen Positionierbohrung 74 gebildet wird. Der Positionierstift 72 ist einstückig mit dem Gehäusedeckel 16 ausgebildet und sitzt spielfrei mit Klemmsitz in der Positionierbohrung 74. Die Positionieranordnung 70 ist so nah, wie es konstruktiv möglich ist, an dem Positionsaufnehmer 20, und so weit entfernt, wie möglich, von den Steckeranordnungen 50, 51 angeordnet. Vorliegend ist die Positionieranordnung 70 annähernd jenseits der Steckeranordnungen 50, 51 in Bezug auf den Positionsaufnehmer 20 angeordnet, und ca. 2 cm von ihm entfernt.

Bei der Montage des Gehäusedeckels 16 an den Gehäusekörper 14 wird zunächst der Positionierstift 72 in Richtung der Steckachse 71 in die Positionierbohrung 74 gesteckt. Anschließend bzw. gleichzeitig werden zwei Metall-Steckerzungen 31,32 in korrespondierende gehäusedeckelseitige Metall-Steckerklammern 34, 35 eingesteckt. Die Steckerklammern 34, 35 weisen hierzu jeweils einen Einsteckschlitz 36, 37 auf. Die Steckerzunge 31, 32 wird mit ihrer Grundebene um 90° verdreht zu der Grundebene der Steckerklammer 34, 35 eingesteckt.

Parallel zu den Steckerklammern 34, 35 sind jeweils zwei Steckerzungen-Führungen 38, 39, 40, 41 mit jeweils einem Führungsschlitz 42, 43, 44, 45 angeordnet. Eine Steckerzunge 31, 32, eine zugeordnete Steckerklammer 34, 35 sowie die jeweils zugeordneten Steckerzungen-Führungen 38, 39; 40, 41 bilden jeweils eine Steckanschluss-Anordnung 50, 51.

In der Figur 3 sind der Verständlichkeit halber die Steckerzungen 31, 32 ohne den Antriebsmotor 12 dargestellt.

Die Breite der Steckerzungen 31, 32 beträgt ungefähr 4mm. Auch der Abstand der Außenseiten der miteinander korrespondierenden Führungen 38, 39 einer Steckanschluss-Anordnung 50, 51 beträgt jeweils ungefähr 4mm. Die Weite W des Führungsschlitzes 42, 43, 44, 45 beträgt ungefähr das 1,1fache der Stärke der Steckerzungen 31, 32. Die Steckerzungen 31, 32 werden also in den Führungsschlitzen 42 bis 45 mit geringem Spiel und annähernd widerstandsfrei geführt.

Der Führungsschlitz 42 bis 45 ragt jeweils distal über den Einsteckschlitz 36, 37 hinaus. Hierdurch wird sichergestellt, dass beim Einführen der Steckerzungen 31, 32 in die Steckanschluss-Anordnungen 50, 51 die Ausrichtung auf die Einsteckschlitze 36, 37 durch die Steckerzungen-Führungen 38, 39, 40, 41 erfolgt, bevor die Steckerzungen 31,32 in die Einsteckschlitze 36,37 eindringen. Jede der Steckerzungen-Führungen 38, 39, 40, 41 weist jeweils einen V-förmigen Einfädelungstrichter 60 auf, durch den das Einführen der Steckerzungen 31, 32 in die Führungsschlitze 42 bis 45 vereinfacht wird.

Die Steckerzungen-Führungen 38 bis 41 werden jeweils von Führungskörpern 55, 56, 57, 58 gebildet, die aus Kunststoff bestehen und einstückig mit dem Gehäusedeckel 16 ausgebildet bzw. an diesen angeformt sind. Die Führungskörper 55 bis 58 sind an ihren Querseiten jeweils durch eine Querwand verbunden, so dass die Führungskörper 55, 56 und die ihnen zugeordneten Querwände jeweils ein vierseitig geschlossenes und in Querrichtung geschlitztes Steckergehäuse bilden.

## Patentansprüche

1. Elektrische Verbrennungskraftmaschinen-Stellanordnung (10) mit einem Gehäusekörper (14), der einen elektrischen Antriebsmotor (12) und eine Abtriebswelle (80) mit einem Positionsgeber (82) hält, und einem Gehäusedeckel (16) mit einem berührungslosen Positionsaufnehmer (20),
wobei der Gehäusedeckel (16) und der Antriebsmotor (12) durch mindestens eine elektrische Steckanschluss-Anordnung (50, 51) miteinander verbunden sind, die durch eine Steckerzunge (31, 32) und eine gegenüberliegende und einen Einsteckschlitz (36, 37) aufweisende Steckerklammer (34, 35) gebildet wird,
**dadurch gekennzeichnet, dass**
der Gehäusekörper (14) und der Gehäusedeckel (16) eine Positionieranordnung (70) bestehend aus einem Positionierstift (72) und einer Positionierbohrung (74) aufweisen, in die der Positionierstift (72) eingesteckt ist, und
die Steckeranordnung (50, 51) steckerklammerseitig eine separate Steckerzungen-Führung (38, 39, 40, 41) mit einem Führungsschlitz (42, 43, 44, 45) aufweist, der parallel zu dem Einsteckschlitz (36, 37) und der Steckachse (71) der Positionieranordnung (70) angeordnet ist.

2. Elektrische Verbrennungskraftmaschinen-Stellanordnung (10) nach Anspruch 1, **dadurch gekennzeichnet, dass** die Positionieranordnung (70) radial näher an dem Positionsaufnehmer (20) als an der Steckanschluss- Anordnung (50, 51) angeordnet ist.

3. Elektrische Verbrennungskraftmaschinen-Stellanordnung (10) nach Anspruch 1 oder 2, **dadurch gekennzeichnet, dass** der Positionierstift (72) mit Klemmsitz in der Positionierbohrung (74) sitzt.

4. Elektrische Verbrennungskraftmaschinen-Stellanordnung (10) nach einem der Ansprüche 1 bis 3, **dadurch gekennzeichnet, dass** der Positionierstift (72) mindestens dreikantig und die Positionierbohrung (74) zylindrisch ist

5. Elektrische Verbrennungskraftmaschinen-Stellanordnung (10) nach einem der Ansprüche 1 bis 4, **dadurch gekennzeichnet, dass** je eine Steckerzungen-Führung (38, 39; 40, 41) zu beiden Längsseiten der Steckerklammer (34, 35) vorgesehen ist.

6. Elektrische Verbrennungskraftmaschinen-Stellanordnung (10) nach einem der Ansprüche 1 bis 5, **dadurch gekennzeichnet, dass** der Führungsschlitz (42 bis 45) jeweils von einem Führungskörper (55 bis 58) gebildet wird, der einstückig mit dem Gehäusedeckel (16) bzw. dem Gehäusekörper (14) ausgebildet ist.

7. Elektrische Verbrennungskraftmaschinen-Stellanordnung (10) nach einem der Ansprüche 1 bis 6, **dadurch gekennzeichnet, dass** der Führungskörper (38 bis 41) an seinem distalen Führungsschlitz-Ende einen Einfädelungstrichter (50) aufweist.

8. Elektrische Verbrennungskraftmaschinen-Stellanordnung (10) nach einem der Ansprüche 1 bis 7, **dadurch gekennzeichnet, dass** der Führungsschlitz (42 bis 45) distal über den Einsteckschlitz (36, 37) hinausragt.

9. Elektrische Verbrennungskraftmaschinen-Stellanordnung (10) nach einem der Ansprüche 1 bis 8, **dadurch gekennzeichnet, dass** die Steckerzungen-Breite größer als der Abstand der äußeren Schlitze zueinander ist.

10. Elektrische Verbrennungskraftmaschinen-Stellanordnung (10) nach einem der Ansprüche 1 bis 7, **dadurch gekennzeichnet, dass** die Führungsschlitz-Weite W größer als das 0,85fache der Steckerzungen-Stärke ist, besonders bevorzugt größer als das 1,0fache.

11. Elektrische Verbrennungskraftmaschinen-Stellanordnung (10) nach einem der Ansprüche 1 bis 8, **dadurch gekennzeichnet, dass** zwei Steckeranschluss-Anordnungen (50, 51) vorgesehen sind.

12. Elektrische Verbrennungskraftmaschinen-Stellanordnung (10) nach einem der Ansprüche 1 bis 9, **dadurch gekennzeichnet, dass** die Steckerklammer (34, 35) gehäusedeckelseitig angeordnet ist.

## Claims

1. An electrical internal combustion engine actuating arrangement comprising a housing body (14) having disposed therein an electric drive motor (12) and an output shaft (80) having a position transducer (82), and a housing cover (16) with a contactless position sensor (20),
the housing cover (16) and the electric drive motor (12) being connected via at least one electrical plug connection arrangement (50, 51) formed by a plug blade (31, 32) and an opposite plug clamp (34, 36) having a plug-in slot (36, 37),
**characterized in that**
the housing body (14) and the housing cover (16) include a positioning arrangement (70) formed by a positioning pin (72) and a positioning bore (74) into which the positioning pin (72) is inserted, and
the plug arrangement (50, 51) includes, on a side of the plug clamp, a separate plug blade guide (38, 39, 40, 41) with a guide slot (42, 43, 44, 45) arranged in parallel with the plug-in slot (36, 37) and a plug-in axis (71) of the positioning arrangement (70).

2. The electrical internal combustion engine actuating arrangement (10) as recited in claim 1, **characterized in that** in a radial direction, the positioning arrangement (70) is arranged closer to the position sensor (20) than to the electrical plug connection arrangement (50, 51).

3. The electrical internal combustion engine actuating arrangement (10) as recited in claim 1 or 2, **characterized in that** the positioning pin (72) is configured to engage in a force fit engagement in the positioning bore (74).

4. The electrical internal combustion engine actuating arrangement (10) as recited in one of claims 1 to 3, **characterized in that** the positioning pin (72) is at least triangular and the positioning bore (74) is cylindrical.

5. The electrical internal combustion engine actuating arrangement (10) as recited in one of claims 1 to 4, **characterized in that** one plug blade guide (38, 39, 40, 41) is disposed on either longitudinal side of the opposite plug clamp (34, 35), respectively.

6. The electrical internal combustion engine actuating arrangement (10) as recited in one of claims 1 to 5, **characterized in that** the guide slot (42 to 45) is respectively defined by a guide body (55 to 58), the guide body being formed integrally with the housing cover (16) or the housing body (14).

7. The electrical internal combustion engine actuating arrangement (10) as recited in one of claims 1 to 6, **characterized in that** the guide body (38 to 41) includes, at a distal guide slot end thereof, an insertion funnel (50).

8. The electrical internal combustion engine actuating arrangement (10) as recited in one of claims 1 to 7, **characterized In that** the guide slot (42 to 45) protrudes distally beyond the plug-in slot (36, 37).

9. The electrical internal combustion engine actuating arrangement (10) as recited in one of claims 1 to 8, **characterized in that** a width of the plug blade is larger than a distance between the outer slots.

10. The electrical internal combustion engine actuating arrangement (10) as recited in one of claims 1 to 7, **characterized in that** a width W of the guide slots is larger than 0.85 times a thickness of the plug blade and, as is particularly preferred, larger than 1.0 times.

11. The electrical internal combustion engine actuating arrangement (10) as recited in one of claims 1 to 8, **characterized in that** two electrical plug connection arrangements (50, 51) are provided.

12. The electrical internal combustion engine actuating arrangement (10) as recited in one of claims 1 to 9, **characterized in that** the opposite plug clamp (34, 35) is disposed on a side of the housing cover.

## Revendications

1. Ensemble électrique de réglage (10) d'un moteur à combustion interne, comprenant un corps de boitier (14) retenant un moteur électrique d'entrainement (12) et un arbre de sortie (80) avec un transmetteur de position (82), et un couvercle du boiter (16) avec un capteur de position (20),
le couvercle du boitier (16) et le moteur d'entrainement (12) étant lié entre eux par au moins un ensemble électrique de connecteurs (50, 51) qui est formé par une languette mâle (31, 32) et un clip de fiche (34, 35) opposé et ayant une fente d'enfichage (36, 37),
**caractérisé en ce que**
le corps de boitier (14) et le couvercle du boitier (16) comprennent un ensemble de positionnement (70) formé par une goupille de positionnement (72) et un trou de positionnement (74), dans lequel la goupille de positionnement (72) est insérée, et
l'ensemble de connecteurs (50, 51) comprenant, côté clip de fiche, un guide de languette mâle (38, 39, 40, 41) séparé ayant une fente de guidage (42, 43, 44, 45) qui est disposée parallèlement à la fente d'enfichage (36, 37) et à l'axe d'enfichage (71) dudit ensemble de positionnement (70).

2. Ensemble électrique de réglage (10) d'un moteur à combustion interne selon la revendication 1, **caractérisé en ce que** l'ensemble de positionnement (70) est situé, dans la direction radiale, plus proche du capteur de position (20), que dudit ensemble de connecteurs (50, 51).

3. Ensemble électrique de réglage (10) d'un moteur à combustion interne selon la revendication 1 ou 2, **caractérisé en ce que** la goupille de positionnement (72) est logée en ajustement serré dans le trou de positionnement (74).

4. Ensemble électrique de réglage (10) d'un moteur à combustion interne selon l'une des revendications 1 à 3, **caractérisé en ce que** la goupille de positionnement (72) est au moins triangulaire et le trou de positionnement (74) est cylindrique.

5. Ensemble électrique de réglage (10) d'un moteur à combustion interne selon l'une des revendications 1 à 4, **caractérisé en ce qu'**un guide de languette mâle (38, 39, 40, 41) est respectivement disposé sur chaque côté longitudinale d'un clip de fiche (34, 35).

6. Ensemble électrique de réglage (10) d'un moteur à combustion interne selon l'une des revendications 1 à 5, **caractérisé en ce que** la fente de guidage (42 à 45) est respectivement formée par un corps de guidage (55 à 58) formé d'un seul tenant avec le couvercle du boitier (16) ou le corps de boitier (14), respectivement.

7. Ensemble électrique de réglage (10) d'un moteur à combustion interne selon l'une des revendications 1 à 6, **caractérisé en ce que** le corps de guidage (38 à 41) présente un entonnoir d'insertion (50) à l'extrémité distale de la fente de guidage.

8. Ensemble électrique de réglage (10) d'un moteur à combustion interne selon l'une des revendications 1 à 7, **caractérisé en ce que** la fente de guidage (42 à 46) s'étend distalement au-delà de la fente d'enfichage (36, 37).

9. Ensemble électrique de réglage (10) d'un moteur à combustion interne selon l'une des revendications 1 à 8, **caractérisé en ce que** la largeur de la languette mâle est supérieure à la distance entre les fentes extérieures.

10. Ensemble électrique de réglage (10) d'un moteur à combustion interne selon l'une des revendications 1 à 7, **caractérisé en ce que** la largeur des fentes de guidage est supérieure à 0,85 fois, et particulièrement préféré, supérieure à 1,0 fois l'épaisseur de la languette mâle.

11. Ensemble électrique de réglage (10) d'un moteur à combustion interne selon l'une des revendications 1 à 8, **caractérisé en ce que** deux ensembles de connecteurs (50, 51) sont prévus.

12. Ensemble électrique de réglage (10) d'un moteur à combustion interne selon l'une des revendications 1 à 9, **caractérisé en ce que** le clip de fiche (34, 35) est disposé côté couvercle du boîtier.
